# EUROPEAN PATENT APPLICATION

(11) **EP 4 700 805 A1**
(43) Date of publication of application: **25.02.2026**
(21) Application number: 25194830.3
(22) Date of filing: 08.08.2025
(51) Int. Cl.: H01F 27/24, H01F 27/30, H01F 37/00, H02M 7/00

(54) **POWER CONVERTER**

(30) Priority: 09.08.2024 CN 202411096098
(71) Applicant: Huawei Digital Power Technologies Co., Ltd., Shenzhen, Guangdong 518043 (CN)
(72) Inventor: CAI, Yaping, Shenzhen, 518043 (CN); TANG, Yunyu, Shenzhen, 518043 (CN); YANG, Peng, Shenzhen, 518043 (CN)
(74) Representative: Gill Jennings & Every LLP

(57) **Abstract**

Embodiments of this application provide a power converter, and relate to the field of energy technologies. The power converter (100) includes a housing (1), a power circuit (2), and one or more inductors (3). The housing is configured to accommodate the power circuit. The power circuit is configured to convert a direct current from a photovoltaic module or an energy storage battery into an alternating current. The inductor is fastened relative to the housing. The inductor includes a frame magnetic core (31), a separation magnetic core (32), a winding magnetic core (33), a first coil (34), and a second coil (35). The separation magnetic core is located in space enclosed by the frame magnetic core, and separates the frame magnetic core into a first accommodation cavity and a second accommodation cavity. The first accommodation cavity is configured to accommodate the winding magnetic core, and the winding magnetic core is configured to wind the first coil. The second accommodation cavity is configured to accommodate the second coil, and the first coil is electrically connected to the second coil. According to the foregoing technical solution, a possibility that an inductance of the inductor is greatly reduced can be reduced, so that the inductor in an overload scenario can suppress a current.

## Description

### TECHNICAL FIELD

This application relates to the field of energy technologies, and in particular, to a power converter.

### BACKGROUND

An inductor is an important electrical component in a device like an inverter, an energy storage converter, or a charging pile. With an increase of power electronic power, a higher requirement is imposed on an inductance of the inductor under a high through-current.

In an overload scenario (for example, an overload current is 1.5 to 2 times a rated current), the inductor is severely saturated due to impact of a material characteristic and the like of a magnetic core, the inductance is greatly reduced, and a current suppression ability is lost. As a result, a current surge in the overload scenario may affect control stability.

### SUMMARY

This application provides a power converter, to reduce a possibility that an inductance of an inductor is greatly reduced, so that the inductor in an overload scenario can suppress a current.

To achieve the foregoing objectives, the following technical solutions are used in this application.

This application provides a power converter. The power converter includes a housing, a power circuit, and one or more inductors. The housing is configured to accommodate the power circuit. The power circuit is configured to convert a direct current from a photovoltaic module or an energy storage battery into an alternating current. The inductor is fastened relative to the housing. The inductor includes a frame magnetic core, a separation magnetic core, a winding magnetic core, a first coil, and a second coil. The separation magnetic core is located in space enclosed by the frame magnetic core, and separates the frame magnetic core into a first accommodation cavity and a second accommodation cavity. The first accommodation cavity is configured to accommodate the winding magnetic core, and the winding magnetic core is configured to wind the first coil. The second accommodation cavity is configured to accommodate the second coil, and the first coil is electrically connected to the second coil.

It may be understood that inductors in this application may be divided into a first sub-inductor and a second sub-inductor. The first sub-inductor includes parts that are of the frame magnetic core and the separation magnetic core and by which the first accommodation cavity is enclosed, the winding magnetic core, and the first coil on the winding magnetic core. The second sub-inductor includes parts that are of the frame magnetic core and the separation magnetic core and by which the second accommodation cavity is enclosed, and the second coil in the second accommodation cavity. Under a rated current, the first sub-inductor can provide a part of inductance, and the second sub-inductor may also provide a part of inductance. In this application, an inductance of the inductor is understood as an inductance obtained by superposing the inductance provided by the first sub-inductor and the inductance provided by the second sub-inductor, so that the inductor can suppress a current. In a high-current scenario, for example, an overload current passes through the first coil and the second coil, because the first coil is a magnetic core coil, after the winding magnetic core is saturated, magnetic permeability (µ) of the winding magnetic core is greatly reduced. As a result, the inductance of the first sub-inductor is greatly decreased. However, the second coil is a hollow coil, magnetic permeability of the air basically remains unchanged, that is, the inductance of the second sub-inductor does not change greatly. The inductance (which may also be referred to as a bias inductance) of the inductor at this time is understood as an inductance obtained by superposing the inductance provided by the first sub-inductor and the inductance provided by the second sub-inductor, so that the inductance can meet a requirement of current suppression. For example, under the rated current, the inductance provided by the first sub-inductor is greater than the inductance provided by the second sub-inductor, and under the overload current, the inductance provided by the first sub-inductor is greatly reduced or even lower than the inductance provided by the second sub-inductor (the inductance provided by the second sub-inductor basically remains unchanged). In this case, the inductance of the inductor mainly depends on the inductance provided by the second sub-inductor, so that the inductance of the inductor can meet the requirement of current suppression under the rated current and the overload current. In addition, the inductance of the first sub-inductor and the inductance of the second sub-inductor may be randomly combined and matched by changing a quantity of winding turns of the first coil and the second coil, to meet different inductance requirements.

In an optional implementation, the second coil is a hollow coil.

In an optional implementation, when a current is applied to the first coil and the second coil, a direction of a magnetic field inside the first coil is the same as a direction of a magnetic field inside the second coil.

When the current passes through the first coil and the second coil, the direction of the magnetic field inside the first coil is the same as the direction of the magnetic field inside the second coil. In this application, when the frame magnetic core and the separation magnetic core are arranged, the inductance of the first sub-inductor and the inductance of the second sub-inductor are superposed. Because the inductance of the second sub-inductor is not greatly reduced, the inductance can meet a requirement of current suppression.

In an optional implementation, both the first coil and the second coil are wound in an axial direction of the winding magnetic core, and the axial direction of the winding magnetic core is parallel to an arrangement direction of the first accommodation cavity and the second accommodation cavity.

In the winding manner of the first coil and the second coil, when the current flows through the first coil and the second coil, a current input end and a current output end of the first coil are adjusted, and a current input end and a current output end of the second coil are adjusted, so that the direction of the magnetic field inside the first coil is the same as the direction of the magnetic field inside the second coil. In this way, the inductance provided by the first sub-inductor and the inductance provided by the second sub-inductor can be better superposed. Because the inductance of the second sub-inductor does not change greatly, both an initial inductance and the bias inductance of the inductor can meet the requirement of current suppression.

In an optional implementation, one part of the second coil is located in the second accommodation cavity and is wound in the axial direction of the winding magnetic core, and the other part of the second coil extends out of the second accommodation cavity.

The parts that are of the frame magnetic core and the separation magnetic core and by which the second accommodation cavity is enclosed wrap a wound part of the second coil, and only the outlet end of the second coil extends out of the second accommodation cavity. In this way, a magnetic line of the second coil is restricted, a part of inductance is provided, a magnetic flux leaking into the air is reduced, and electro magnetic compatibility (EMC) of the inductor is improved. This facilitates stable operation of the power converter.

In an optional implementation, the first coil is wound in an axial direction of the winding magnetic core, the second coil is wound in a direction parallel to the axial direction of the winding magnetic core, and the axial direction of the winding magnetic core is perpendicular to an arrangement direction of the first accommodation cavity and the second accommodation cavity.

The first coil and the second coil are disposed side by side. A current input end and a current output end of the first coil are adjusted, and a current input end and a current output end of the second coil are adjusted, so that when the current passes through the first coil and the second coil, the direction of the magnetic field inside the first coil is the same as the direction of the magnetic field inside the second coil. In this way, the inductance provided by the first sub-inductor and the inductance provided by the second sub-inductor are also superposed, so that both the initial inductance and the bias inductance of the inductor can meet the requirement of current suppression.

In an optional implementation, one part of the second coil is located in the second accommodation cavity and is wound in the direction parallel to the axial direction of the winding magnetic core, and the other part of the second coil extends out of the second accommodation cavity.

The parts that are of the frame magnetic core and the separation magnetic core and by which the second accommodation cavity is enclosed wrap a wound part of the second coil, and only the outlet end of the second coil extends out of the second accommodation cavity. In this way, a magnetic line of the second coil is restricted, a part of inductance is provided, a magnetic flux leaking into the air is reduced, and electro magnetic compatibility of the inductor is improved. This facilitates stable operation of the power converter.

In an optional implementation, the inductor further includes a third coil, the third coil is at least partially located in the second accommodation cavity, and the third coil is electrically connected to the second coil. When a current is applied to the second coil and the third coil, a direction of a magnetic field inside the second coil is the same as a direction of a magnetic field inside the third coil.

Another coil is added to the second accommodation cavity, and the second coil is electrically connected to the third coil. The second sub-inductor can provide a larger inductance in the overload scenario, and the inductance of the inductor in the overload scenario is further increased without additionally increasing a size of the frame magnetic core and a size of the separation magnetic core. This increases the bias inductance and meets a requirement for the initial inductance and the bias inductance.

In an optional implementation, the third coil is a hollow coil.

In an optional implementation, one of the second coil and the third coil is sleeved outside the other.

The second coil and the third coil are sleeved with each other. For example, the second coil is sleeved outside the third coil, so that space in the second accommodation cavity is saved, and the inductance of the second sub-inductor is also increased.

In an optional implementation, the inductor further includes a circuit board, two outlet ends of the first coil and two outlet ends of the second coil are all fastened to the circuit board, and one outlet end of the first coil is electrically connected to one outlet end of the second coil through a trace of the circuit board.

The circuit board can not only fasten the first coil and the second coil, but also provide a condition for the electrical connection between the first coil and the second coil through the trace of the circuit board, so that the first coil and the second coil are connected in series, and there is no need to additionally dispose a conducting wire to connect the first coil and the second coil. This reduces production costs.

In an optional implementation, the frame magnetic core includes a first magnetic pillar, a second magnetic pillar, a third magnetic pillar, and a fourth magnetic pillar that are sequentially connected end to end. An arrangement direction of the first magnetic pillar and the third magnetic pillar is perpendicular to an arrangement direction of the second magnetic pillar and the fourth magnetic pillar. The first accommodation cavity is located between the first magnetic pillar and the separation magnetic core, and the second accommodation cavity is located between the separation magnetic core and the third magnetic pillar.

The frame magnetic core is enclosed by the first magnetic pillar, the second magnetic pillar, the third magnetic pillar, and the fourth magnetic pillar through lap joint, and the separation magnetic core is disposed in space enclosed by the frame magnetic core, so that the space inside the frame magnetic core may be separated into the first accommodation cavity and the second accommodation cavity. In addition, the first accommodation cavity and the second accommodation cavity share the separation magnetic core, so that leakage of magnetic lines of the first coil and the second coil is reduced, and an electromagnetic compatibility problem is resolved.

### BRIEF DESCRIPTION OF DRAWINGS

FIG. 1 is a topology diagram of a power converter according to an embodiment of this application;
FIG. 2 is a diagram of a structure of a power converter according to an embodiment of this application;
FIG. 3 is a diagram of an overall structure of an inductor according to an embodiment of this application;
FIG. 4 is a diagram of a local structure of an inductor according to an embodiment of this application;
FIG. 5 is a diagram of a structure of a frame magnetic core, a separation magnetic core, and a wire winding magnetic core according to an embodiment of this application;
FIG. 6 is a diagram of a winding manner of a first coil and a second coil according to an embodiment of this application;
FIG. 7 is a diagram of a direction of a magnetic field of a first coil to which a current is applied according to an embodiment of this application;
FIG. 8 is a diagram of a direction of a magnetic field of a second coil to which a current is applied according to an embodiment of this application;
FIG. 9 is a diagram of an axis of a winding magnetic core according to an embodiment of this application;
FIG. 10 is a diagram of another winding manner of a first coil and a second coil according to an embodiment of this application;
FIG. 11 is a diagram of a structure of a third coil according to an embodiment of this application;
FIG. 12 is a diagram in which a second coil is sleeved outside a third coil according to an embodiment of this application;
FIG. 13 is a diagram of a structure of another third coil according to an embodiment of this application;
FIG. 14 is a diagram of an overall structure of another inductor according to an embodiment of this application;
FIG. 15 is a diagram of a structure of still another inductor according to an embodiment of this application;
FIG. 16 is a diagram of a structure of still another inductor according to an embodiment of this application.
FIG. 17 is a diagram of a structure of a heat dissipation cover according to an embodiment of this application;
FIG. 18 is a diagram of a structure of still another inductor according to an embodiment of this application;
FIG. 19 is a diagram of a structure of still another inductor according to an embodiment of this application; and
FIG. 20 is a diagram of a structure of still another inductor according to an embodiment of this application.

### Reference numerals:

100: power converter; 101: power circuit; 102: filter circuit; 200: direct current source;
1: housing; 2: power board; 3: inductor; 31: frame magnetic core; 311: first magnetic pillar; 312: second magnetic pillar; 313: third magnetic pillar; 314: fourth magnetic pillar; 315: fifth magnetic pillar; 316: sixth magnetic pillar; 317: seventh magnetic pillar; 318: eighth magnetic pillar; 319: ninth magnetic pillar; 310: tenth magnetic pillar; 32: separation magnetic core; 321: first accommodation cavity; 322: second accommodation cavity; 33: winding magnetic core; 34: first coil; 35: second coil; 36: third coil; 37: heat dissipation cover; 371: mounting opening; 372: fin; 38: circuit board; 381: opening; 39: connection terminal; 301: first-phase inductor; 302: second-phase inductor; 303: third-phase inductor; 4: conductive structure; 5: temperature detector; and 6: support member.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

In the accompanying drawings of embodiments of this application, entity structures such as components and assemblies are represented by using guide lines, and hollow-out structures such as openings, holes, space, and cavities are represented by using guide lines with arrows.

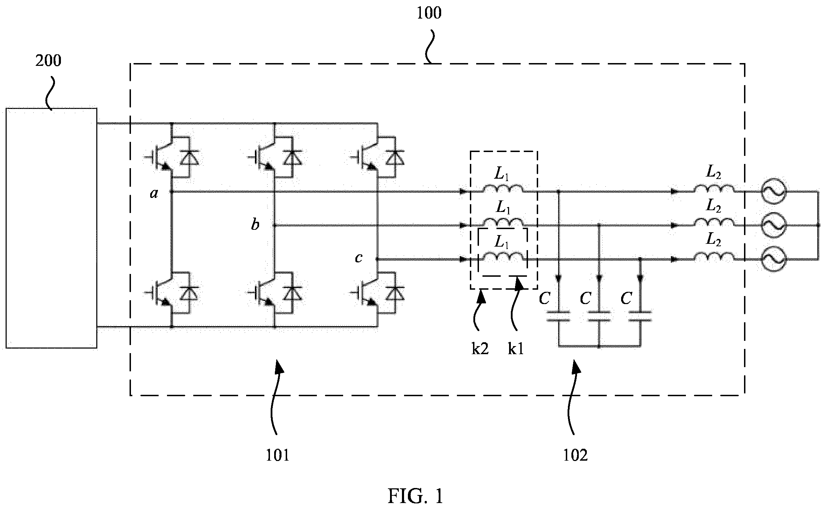

An embodiment of this application provides a power converter 100. FIG. 1 shows an example of a topology diagram of the power converter 100. The power converter 100 includes a power circuit 101. In an example, the power converter 100 may be an inverter. In this example, the power converter 100 may be used in a photovoltaic system. A direct current source 200 in FIG. 1 is a photovoltaic module. The power circuit 101 (for example, an inverter circuit) is configured to: convert a direct current from the photovoltaic module into an alternating current (for example, alternating currents of three phases: a phase a, a phase b, and a phase c in FIG. 1), and output the alternating current to a power grid or another load. In another example, the power converter 100 may be a power conversion system (PCS). In this example, the power converter 100 may be used in an energy storage system. The direct current source 200 in FIG. 1 is an energy storage battery. The power circuit 101 is configured to: convert a direct current from the energy storage battery into an alternating current, and output the alternating current to a power grid or another load.

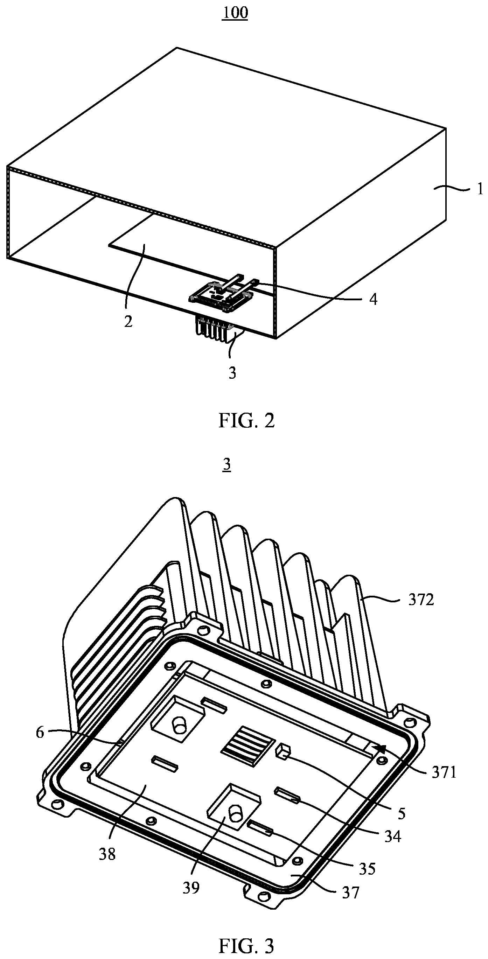

FIG. 2 shows an example of a structure of the power converter 100 (FIG. 2 is a cross-section diagram of the power converter 100). Refer to FIG. 2. The power converter 100 includes a housing 1, a power board 2, and one or more inductors 3. FIG. 2 shows only one inductor 3, and the inductor 3 is used as an example. The inductor 3 may be any inductor in the power converter 100. For example, the inductor 3 is a power inductor, and may be used to suppress an output high-frequency ripple. Refer to FIG. 1 and FIG. 2. In an example, the power converter 100 further includes a filter circuit 102. The filter circuit 102 may be an LCL filter circuit (L1 and L2 in FIG. 1 respectively indicate different inductors, and C indicates to a capacitor). In this type of filter circuit 102, a first-stage inductor L1 has important suppression effect on a ripple, and the inductor 3 in this application may be one first-stage inductor L1 (one of a plurality of first-stage inductors L1) in a dashed-line box K1. The inductor 3 in this application may alternatively be an integrated inductor including all first-stage inductors L1 in a dashed-line box K2. For example, the inductor 3 in this application is a multi-phase integrated inductor.

Refer to FIG. 2. The housing 1 is configured to accommodate a power circuit, the power board 2 is a circuit board and is configured to dispose at least a part of the power circuit, and the power board 2 is mounted in the housing 1. The inductor 3 is fastened relative to the housing 1. For example, the inductor 3 is fastened to the housing 1, or the inductor 3 is fastened to the power board 2, and the power board 2 is fastened to the housing 1. In the example shown in FIG. 2, one part of the inductor 3 is located inside the housing 1, and the other part extends out of the housing 1. In another example, the inductor 3 may be located inside the housing 1, or the inductor 3 may be located outside the housing 1.

FIG. 3 shows an example of an overall structure of the inductor 3. Refer to FIG. 3. The inductor 3 includes one heat dissipation cover 37 (which may also be referred to as a heat dissipation housing) and one circuit board 38. The heat dissipation cover 37 has a mounting opening 371 that is in communication with internal space of the heat dissipation cover 37, a structure inside the heat dissipation cover 37 is mounted in the internal space of the heat dissipation cover 37 through the mounting opening 371, and the circuit board 38 is disposed at the mounting opening 371. A plurality of fins 372 (heat dissipation fins) are further fastened to an outer side of the heat dissipation cover 37, and the heat dissipation cover 37 is configured to transfer heat in the internal space to the outside through the plurality of fins 372, to achieve heat dissipation.

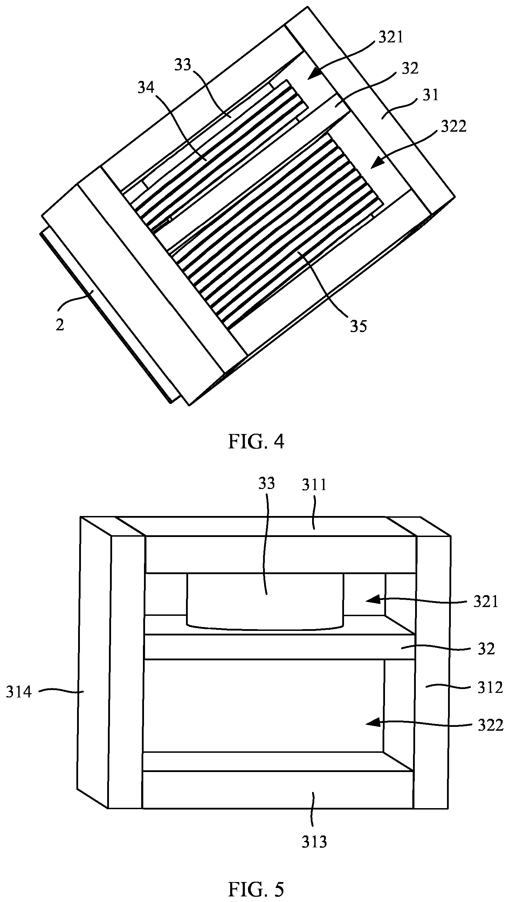

FIG. 4 shows an example of the structure in the internal space of the heat dissipation cover 37 in FIG. 3. Refer to FIG. 4. The inductor 3 further includes a frame magnetic core 31, a separation magnetic core 32, a winding magnetic core 33, a first coil 34, and a second coil 35. FIG. 5 shows an example of a structure of the frame magnetic core 31, the separation magnetic core 32, and the winding magnetic core 33. Space is enclosed by the frame magnetic core 31, the separation magnetic core 32 is located in the space enclosed by the frame magnetic core 31, the separation magnetic core 32 separates the frame magnetic core 31 into a first accommodation cavity 321 and a second accommodation cavity 322, and the first accommodation cavity 321 and the second accommodation cavity 322 share the separation magnetic core 32.

Refer to FIG. 4 and FIG. 5. The first accommodation cavity 321 is configured to accommodate the winding magnetic core 33, the winding magnetic core 33 is configured to wind the first coil 34 (the first coil 34 is a magnetic core coil having a magnetic core inside), the second accommodation cavity 322 is configured to accommodate the second coil 35 (the second coil 35 is a hollow coil having no magnetic core inside), and the first accommodation cavity 321 and the second accommodation cavity 322 share the separation magnetic core 32. In this way, leakage of magnetic lines of the first coil 34 and the second coil 35 is reduced, which helps resolve an electro magnetic compatibility (EMC) problem. In some other examples, the inductor 3 may not include the heat dissipation cover 37, and directly expose the structure in the internal space of the heat dissipation cover 37.

The first coil 34 is electrically connected to the second coil 35. Refer to FIG. 4. In an example, the first coil 34 is electrically connected to the second coil 35 through a trace of the circuit board 38. For example, the circuit board 38 is disposed on a side of the frame magnetic core 31, the circuit board 38 is directly opposite to the first accommodation cavity 321 and the second accommodation cavity 322, two outlet ends of the first coil 34 and two outlet ends of the second coil 35 are all fastened to the circuit board 38, and one outlet end of the first coil 34 is electrically connected to one outlet end of the second coil 35 through the trace of the circuit board 38.

In an example in which the first coil 34 is electrically connected to the second coil 35 through the trace of the circuit board 38, the circuit board 38 can not only fasten the first coil 34 and the second coil 35, but also provide a condition for the electrical connection between the first coil 34 and the second coil 35 through the trace of the circuit board 38, so that the first coil 34 and the second coil 35 are connected in series, and there is no need to additionally dispose a conducting wire to connect the first coil 34 and the second coil 35. This reduces production costs. In another example, the inductor 3 may not include the circuit board 38, and the first coil 34 is electrically connected to the second coil 35 through a conducting wire, a lead, or another conductive structure. Alternatively, the first coil 34 and the second coil 35 are two parts of a complete coil, and the two parts of the complete coil are respectively wound in the first accommodation cavity 321 and the second accommodation cavity 322.

The frame magnetic core 31 may be of any suitable structure. Refer to FIG. 5. For example, in an example, the frame magnetic core 31 includes a first magnetic pillar 311, a second magnetic pillar 312, a third magnetic pillar 313, and a fourth magnetic pillar 314 that are sequentially connected end to end. An extension direction of the first magnetic pillar 311 is parallel to an extension direction of the third magnetic pillar 313, an extension direction of the second magnetic pillar 312 is parallel to an extension direction of the fourth magnetic pillar 314, and an arrangement direction of the first magnetic pillar 311 and the third magnetic pillar 313 is perpendicular to an arrangement direction of the second magnetic pillar 312 and the fourth magnetic pillar 314. The first magnetic pillar 311, the second magnetic pillar 312, the third magnetic pillar 313, and the fourth magnetic pillar 314 are in lap joint to form the frame magnetic core 31. The first accommodation cavity 321 is located between the first magnetic pillar 311 and the separation magnetic core 32, and the second accommodation cavity 322 is located between the separation magnetic core 32 and the third magnetic pillar 313.

For a structure of the frame magnetic core 31, in another example, the frame magnetic core 31 may alternatively be disposed as a complete frame magnetic core, and is not formed by splicing a plurality of magnetic pillars, or the frame magnetic core 31 is formed by splicing two, three, or five magnetic pillars, or the frame magnetic core 31 is formed by splicing two "U"-shaped magnetic cores.

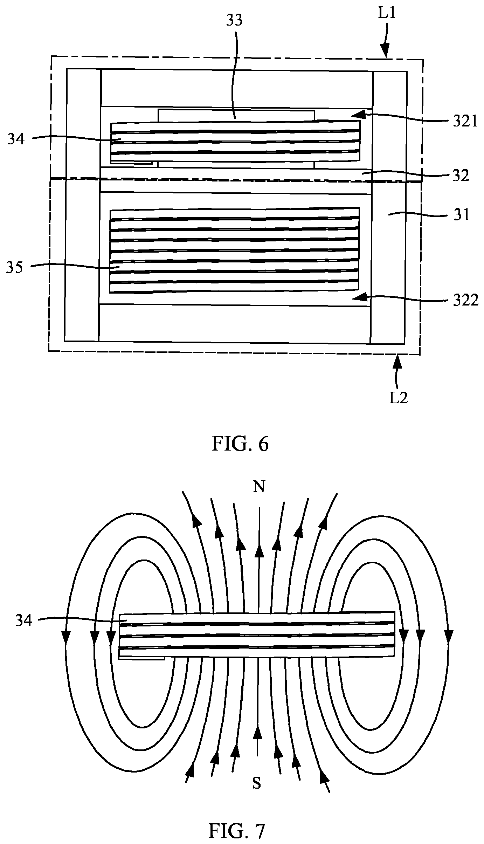

It may be understood that the inductor 3 is divided into a first sub-inductor and a second sub-inductor. FIG. 6 shows an example of the first sub-inductor (a part included in a dotted-line box L1) and the second sub-inductor (a part included in a dashed-line box L2). It should be noted that the division is merely intended to facilitate explanation of the inductor 3 in this application, but not to limit this application. The inductor 3 in this application is essentially a complete inductor. The first sub-inductor includes parts that are of the frame magnetic core 31 and the separation magnetic core 32 and by which the first accommodation cavity 321 is enclosed, the winding magnetic core 33, and the first coil 34 on the winding magnetic core 33. The second sub-inductor includes parts that are of the frame magnetic core 31 and the separation magnetic core 32 and by which the second accommodation cavity 322 is enclosed, and the second coil 35 in the second accommodation cavity 322.

Under a rated current, the first sub-inductor can provide a part of inductance, and the second sub-inductor may also provide a part of inductance. In this application, an inductance of the inductor 3 is understood as an inductance obtained by superposing the inductance provided by the first sub-inductor and the inductance provided by the second sub-inductor, so that the inductor 3 has suppression effect on a current. In a high-current scenario, for example, an overload current passes through the first coil 34 and the second coil 35, and the overload current may be 1.5 to 2 times of the rated current (this is only an example of the overload current, and is not a limitation on the overload current), because the first coil 34 is a magnetic core coil, after the winding magnetic core 33 is saturated, magnetic permeability (µ) of the winding magnetic core 33 is greatly reduced. As a result, the inductance of the first sub-inductor is greatly decreased. However, the second coil 35 is a hollow coil, magnetic permeability of the air basically remains unchanged, that is, the inductance of the second sub-inductor does not change greatly. The inductance (which may also be referred to as a bias inductance) of the inductor 3 at this time is understood as an inductance obtained by superposing the inductance provided by the first sub-inductor and the inductance provided by the second sub-inductor, so that the inductance can meet a requirement of current suppression.

The foregoing descriptions may be understood by using an example. For example, under the rated current, the inductance provided by the first sub-inductor is higher than the inductance provided by the second sub-inductor. In this case, the inductance of the inductor 3 may mainly depend on the inductance provided by the first sub-inductor (the second sub-inductor also provides a part of inductance). However, under the overload current, because the inductance provided by the second sub-inductor basically remains unchanged, the inductance of the first sub-inductor is greatly decreased or even lower than the inductance of the second sub-inductor. In this case, the inductance of the inductor 3 mainly depends on the inductance provided by the second sub-inductor. In this way, the inductance of the inductor 3 can meet the requirement of current suppression under both the rated current and the overload current.

In addition, the inductance of the first sub-inductor and the inductance of the second sub-inductor may be randomly combined and matched by changing a quantity of winding turns of the first coil 34 and the second coil 35, to meet different inductance requirements. For example, the inductance of the first sub-inductor is increased or decreased under the rated current, or the inductance of the second sub-inductor is increased or decreased under the rated current.

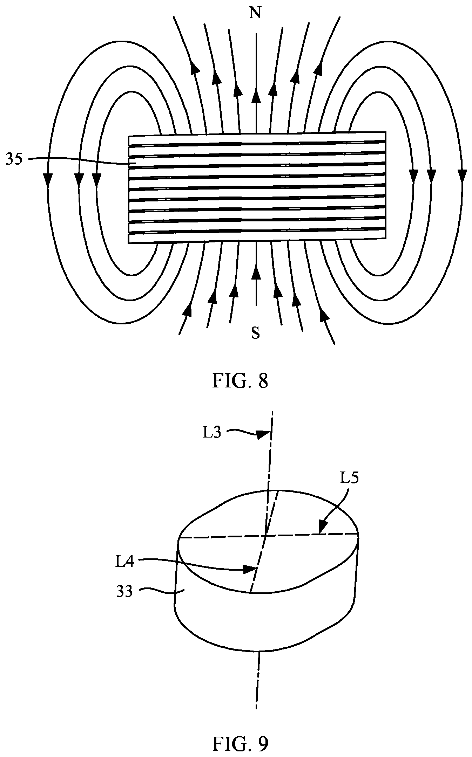

FIG. 7 shows an example of a direction of a magnetic field of the first coil 34 on which a current is applied, and FIG. 8 shows an example of a direction of a magnetic field of the second coil 35 on which a current is applied. When the current is applied to the first coil 34 and the second coil 35, the direction of the magnetic field (from an S pole to an N pole) inside the first coil 34 is the same as the direction of the magnetic field (from the S pole to the N pole) inside the second coil 35. It should be noted that, provided that the directions of the magnetic fields inside the two coils point to a same side, it is considered that the directions of the magnetic fields inside the two coils are the same.

FIG. 7 and FIG. 8 may show the directions of the magnetic fields of the first coil 34 and the second coil 35 in FIG. 6. Refer to FIG. 6. The winding magnetic core 33 is fastened to the separation magnetic core 32, and the separation magnetic core 32 and the winding magnetic core 33 that are fastened to each other are disposed in space enclosed by the frame magnetic core 31, so that the space inside the frame magnetic core 31 may be separated into the first accommodation cavity 321 and the second accommodation cavity 322, and may also provide a winding location for the first coil 34. This facilitates construction of a magnetic core of the inductor 3.

Refer to FIG. 6. Both the first coil 34 and the second coil 35 are wound in an axial direction of the winding magnetic core 33, and the axial direction of the winding magnetic core 33 is parallel to an arrangement direction of the first accommodation cavity 321 and the second accommodation cavity 322. An axis of the winding magnetic core 33 is a central axis of the winding magnetic core 33. For example, when the winding magnetic core 33 is a cylinder or a round table, the axis of the winding magnetic core 33 is a straight line that passes through circle centers of two end faces. When the winding magnetic core 33 is a prism, the axis of the winding magnetic core 33 is a straight line that passes through centers of an upper bottom surface and a lower bottom surface, which may also be understood as that the axis of the winding magnetic core 33 is a straight line in the axial direction of the winding magnetic core 33, and the straight line may pass through centers of two end faces of the winding magnetic core 33. FIG. 9 shows an example of the axis (indicated by a dotted line L3) of the winding magnetic core 33 in this application. An intersection point of a dashed line L4 and a dashed line L5 is a center of one end face of the winding magnetic core 33.

A winding manner of the first coil 34 and the second coil 35 in FIG. 6 may also be understood as that the first coil 34 is wound around a first axis, the second coil 35 is wound around a second axis, and both the first axis and the second axis are parallel to the arrangement direction of the first accommodation cavity 321 and the second accommodation cavity 322. In the winding manner of the first coil 34 and the second coil 35 in FIG. 6, when the current flows through the first coil 34 and the second coil 35, a current input end and a current output end of the first coil 34 are adjusted, and a current input end and a current output end of the second coil 35 are adjusted, so that the direction of the magnetic field inside the first coil 34 is the same as the direction of the magnetic field inside the second coil 35. For example, refer to FIG. 7 and FIG. 8. When the current is applied to the first coil 34 and the second coil 35 (the current passes through the first coil 34 and the second coil 35), the direction of the magnetic field (from the S pole to the N pole) inside the first coil 34 is the same as the direction of the magnetic field (from the S pole to the N pole) inside the second coil 35. In this way, the inductance provided by the first sub-inductor and the inductance provided by the second sub-inductor can be better superposed. Because the inductance of the second sub-inductor does not change greatly, both an initial inductance and the bias inductance of the inductor 3 can meet a requirement of current suppression.

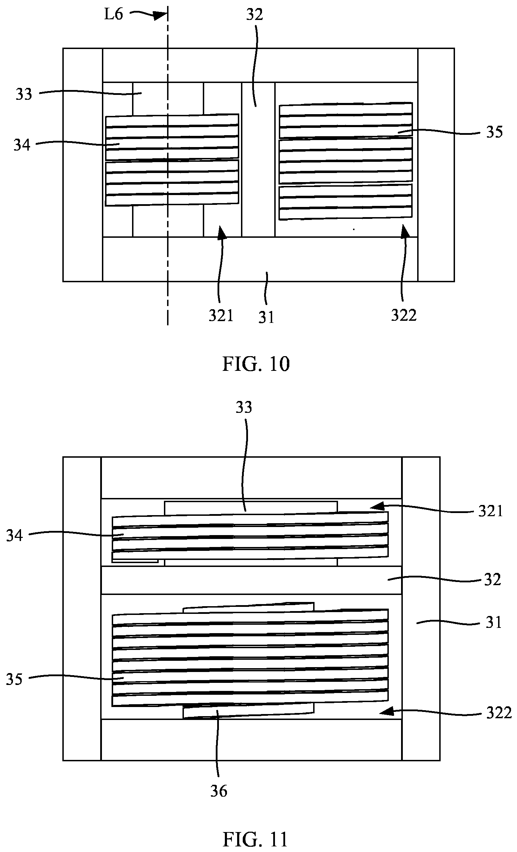

In some other examples, the first coil 34 and the second coil 35 may be wound in another manner. For example, FIG. 10 is a diagram of another winding manner of the first coil 34 and the second coil 35. In this example, the winding magnetic core 33 is fastened to the frame magnetic core 31, and an axial direction (indicated by a dotted line L6) of the winding magnetic core 33 is perpendicular to an arrangement direction of the first accommodation cavity 321 and the second accommodation cavity 322, the first coil 34 is wound in the axial direction of the winding magnetic core 33, and the second coil 35 is wound in a direction parallel to the axial direction of the winding magnetic core 33. The winding manner of the first coil 34 and the second coil 35 in FIG. 10 may also be understood as that the first coil 34 is wound around a first axis, the second coil 35 is wound around a second axis, the first axis and the second axis are parallel to each other, and both are perpendicular to the arrangement direction of the first accommodation cavity 321 and the second accommodation cavity 322. Alternatively, the winding manner of the first coil 34 and the second coil 35 in FIG. 10 may also be understood as that the first coil 34 and the second coil 35 are disposed side by side.

FIG. 7 and FIG. 8 may alternatively show directions of magnetic fields of the first coil 34 and the second coil 35 in FIG. 10. Through adjustment of a current input end and a current output end of the first coil 34 and a current input end and a current output end of the second coil 35, when the first coil 34 and the second coil 35 load a current, the direction of the magnetic field (from S pole to an N pole) inside the first coil 34 is the same as the direction of the magnetic field (from the S pole to the N pole) inside the second coil 35. In this way, the inductance provided by the first sub-inductor and the inductance provided by the second sub-inductor are also superposed, so that both an initial inductance and the bias inductance of the inductor 3 can meet a requirement of current suppression.

In addition, regardless of whether the first coil 34 and the second coil 35 are wound in the manner in FIG. 6 or in the manner in FIG. 10, a wound part (a part that is wound in a multi-turn manner) of the second coil 35 is located in the second accommodation cavity 322, and two parts (the outlet ends) that are of the second coil 35 and that are used for wire outlet extend out of the second accommodation cavity 322. For example, in the example shown in FIG. 6, one part (the wound part) of the second coil 35 is located in the second accommodation cavity 322 and is wound in the axial direction of the winding magnetic core 33, and the other part (the outlet ends) of the second coil 35 extends out of the second accommodation cavity 322. For another example, in the example shown in FIG. 10, one part (the wound part) of the second coil 35 is located in the second accommodation cavity 322 and is wound in the direction parallel to the axial direction of the winding magnetic core 33, and the other part (the outlet ends) of the second coil 35 extends out of the second accommodation cavity 322.

The parts that are of the frame magnetic core 31 and the separation magnetic core 32 and by which the second accommodation cavity 322 is enclosed wrap the wound part of the second coil 35, so that the part that is of the second coil 35 and that is used for wire outlet extends out of the second accommodation cavity 322. In this way, a magnetic line flowing through the second sub-inductor is restricted, a part of inductance is provided, a magnetic flux leaking into the air is reduced, and electro magnetic compatibility of the inductor 3 is improved. This facilitates stable operation of the power converter 100.

In some examples, an inductance may be further increased by adding a coil. For example, the inductor 3 further includes a third coil 36. The third coil 36 is a hollow coil without a magnetic core inside. FIG. 11 shows an example of the third coil 36. The third coil 36 is at least partially located in the second accommodation cavity 322, and the third coil 36 is electrically connected to the second coil 35. In an example in which the inductor 3 includes the circuit board 38, two outlet ends of the third coil 36 and the two outlet ends of the second coil 35 are fastened to the circuit board 38. The third coil 36 may be electrically connected to the second coil 35 through a corresponding trace on the circuit board 38.

In addition, in an example in which the inductor 3 includes the third coil 36, when a current is applied to the second coil 35 and the third coil 36, the direction of the magnetic field inside the second coil 35 is the same as the direction of the magnetic field (a direction from the S pole to the N pole) inside the third coil 36. For example, after the current flows through the second coil 35 and the third coil 36, the direction of the magnetic field inside the third coil 36 is the same as the direction of the magnetic field inside the second coil 35 in FIG. 8. In other words, another coil is added to the second accommodation cavity 322, and the second coil 35 is electrically connected to the third coil 36. The second sub-inductor can provide a larger inductance in the overload scenario, and the inductance of the inductor 3 in the overload scenario is further increased without additionally increasing a size of the frame magnetic core 31 and a size of the separation magnetic core 32. This increases the bias inductance and meets a requirement for the initial inductance and the bias inductance.

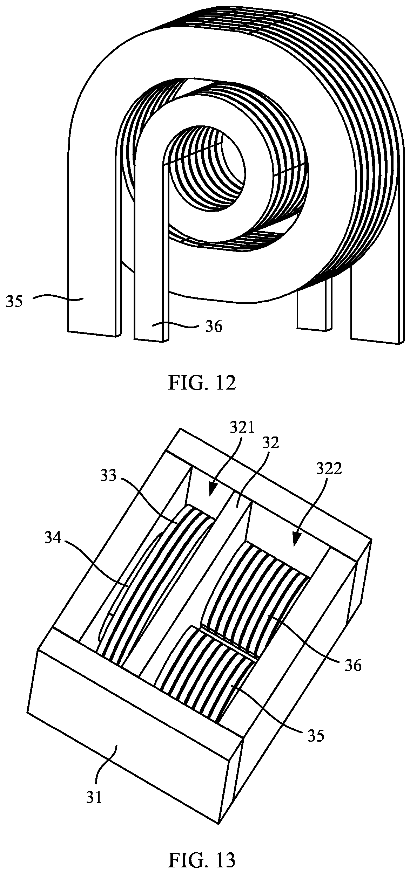

For a location of the third coil 36, in an example, one of the second coil 35 and the third coil 36 is sleeved outside the other. For example, FIG. 12 shows an example in which the second coil 35 is sleeved outside the third coil 36. Refer to FIG. 11 and FIG. 12. Space in the second accommodation cavity 322 can be saved, and the inductance of the second sub-inductor can also be increased. In this example, a coil located on an inner side, for example, the third coil 36 on an inner side of the second coil 35, may be long, so that the outlet ends of the third coil 36 extend from two sides of the second coil 35. In another example, refer to FIG. 13. FIG. 13 shows an example of a case in which the second coil 35 and the third coil 36 are disposed side by side. In this example, when the current is applied to the second coil 35 and the third coil 36, the direction of the magnetic field inside the second coil 35 is also the same as the direction of the magnetic field (the direction from the S pole to the N pole) inside the third coil 36. Both the direction of the magnetic field inside the second coil 35 and the direction of the magnetic field inside the third coil 36 are the same as the direction of the magnetic field (from the S pole to the N pole) inside the first coil 34.

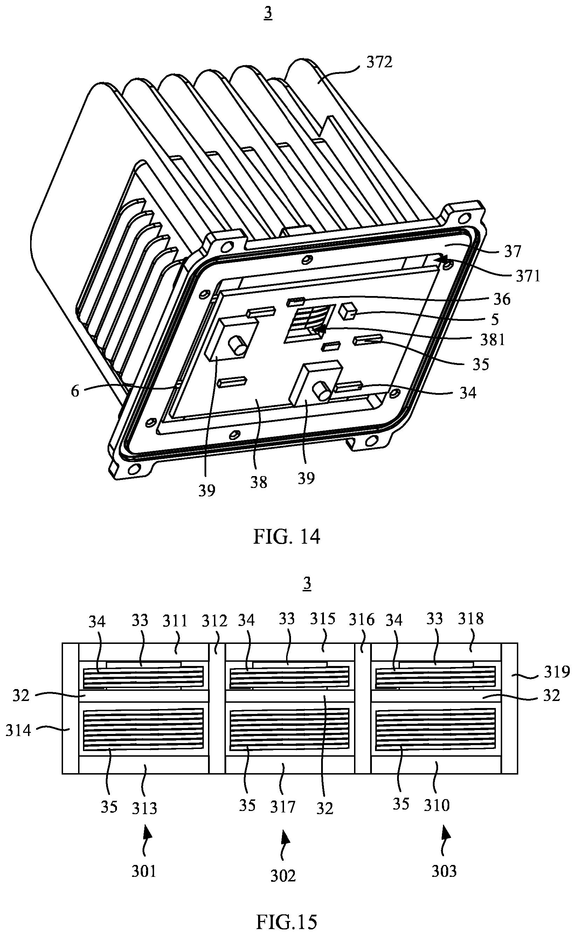

In addition, in an example in which the inductor 3 includes the circuit board 38, the inductor 3 further includes two connection terminals 39 (or nut supports) disposed on the circuit board 38. FIG. 14 shows an example of a structure of the connection terminal 39. The inductor 3 in FIG. 14 includes the first coil 34, the second coil 35, and the third coil 36 (the inductor 3 in FIG. 3 includes the first coil 34 and the second coil 35, and does not include the third coil 36). The inductor 3 shown in FIG. 14 is used as an example. Connections among the two connection terminals 39 and the coils may be as follows: One outlet end of the first coil 34 is electrically connected to one outlet end of the second coil 35 through a corresponding trace on the circuit board 38, the other outlet end of the first coil 34 is electrically connected to the connection terminal 39 through a corresponding trace on the second circuit board 38, the other outlet end of the second coil 35 is electrically connected to one outlet end of the third coil 36 through a corresponding trace on the circuit board 38, and the other outlet end of the third coil 36 is electrically connected to the other connection terminal 39 through a corresponding trace on the second circuit board 38. With auxiliary reference to FIG. 1, the two connection terminals 39 are electrically connected to the power board 2 through corresponding conductive structures 4 (for example, copper bars).

Connections among the two connection terminals 39 and the coils may alternatively be as follows: One outlet end of the first coil 34 is electrically connected to one outlet end of the third coil 36 through a corresponding trace on the circuit board 38, the other outlet end of the first coil 34 is electrically connected to one connection terminal 39 through a corresponding trace on the second circuit board 38, the other outlet end of the third coil 36 is electrically connected to one outlet end of the second coil 35 through a corresponding trace on the circuit board 38, and the other outlet end of the second coil 35 is electrically connected to the other connection terminal 39 through a corresponding trace on the second circuit board 38. With auxiliary reference to FIG. 1, the two connection terminals 39 are electrically connected to the power board 2 through corresponding conductive structures 4.

In some examples, the power converter 100 may further include at least one temperature detector 5 disposed on the second circuit board 38. The inductor 3 shown in FIG. 14 is used as an example. One temperature detector 5 is disposed, the temperature detector 5 is electrically connected to the circuit board 38, and the temperature detector 5 is configured to detect a temperature of the second circuit board 38. In another example, a plurality of temperature detectors 5 may be disposed.

In an example in which the inductor 3 includes a heat dissipation housing, the inductor 3 shown in FIG. 14 is used as an example. The second circuit board 38 has at least one opening 381, the opening 381 is connected to the space in the heat dissipation cover 37, the opening 381 may be a glue filling opening, and the opening 381 is used for a person or a glue filling device to fill glue into the heat dissipation cover 37. Filling glue into the inductor 3 may improve insulation performance, or may fasten internal coils (for example, the first coil 34, the second coil 35, and the third coil 36), enhance mechanical strength of the inductor 3, and improve heat dissipation performance of the inductor 3. In this way, performance and stability of the inductor 3 are improved, to ensure normal operation of the power converter 100.

In addition, the inductor 3 may further include a plurality of support members 6 fastened to the heat dissipation cover 37. Refer to FIG. 14. The support member 6 may be a sheet-shaped or block-shaped support structure (a support sheet or a support block), and the support member 6 abuts against a board surface that is of the second circuit board 38 and that faces the heat dissipation cover 37, to support the circuit board 38. In another example, the support member 6 may alternatively be a columnar support structure. This is not specifically limited in this application.

In some other examples, when the inductor 3 includes the heat dissipation cover 37 and one circuit board 38, the circuit board 38 may alternatively be fastened to the heat dissipation cover 37 through a fastener. For example, the circuit board 38 may be fastened to the heat dissipation cover 37 through a bolt or a screw. In some other examples, the circuit board 38 may alternatively be fastened to the heat dissipation cover 37 through bonding, clamping, or the like.

In addition, a profiling structure may be further disposed in the heat dissipation cover 37, to adapt to a magnetic core or a coil inside the heat dissipation cover 37. For example, a structure including the frame magnetic core 31, the separation magnetic core 32, the winding magnetic core 33, the first coil 34, and the second coil 35 adapts to the profiling structure.

In some examples, the inductor 3 may be a three-phase integrated inductor. FIG. 15 shows an example of still another structure of the inductor 3. A part of the structure of the inductor 3 is hidden in FIG. 15. The inductor 3 in FIG. 15 may be understood as that three groups of magnetic cores and coils of the inductor 3 in FIG. 6 are disposed side by side, and adjacent frame magnetic cores 31 share a side column. The inductor 3 in FIG. 15 includes a first-phase inductor 301, a second-phase inductor 302, and a third-phase inductor 303. A structure in FIG. 6 may be the first-phase inductor 301, or the second-phase inductor 302, or the third-phase inductor 303. For example, in the example shown in FIG. 15, the structure in FIG. 6 is the first-phase inductor 301, the structure of the second-phase inductor 302 and the structure of the third-phase inductor 303 are both the same as the structure of the first-phase inductor 301, and frame magnetic cores 31 of inductors of two adjacent phases share a side column.

Refer to FIG. 15. The inductor 3 further includes a fifth magnetic pillar 315, a sixth magnetic pillar 316, a seventh magnetic pillar 317, an eighth magnetic pillar 318, a ninth magnetic pillar 319, and a tenth magnetic pillar 310. A frame of the first-phase inductor 301 is enclosed by the first magnetic pillar 311, the second magnetic pillar 312, the third magnetic pillar 313, and the fourth magnetic pillar 314, a frame of the second-phase inductor 302 is enclosed by the second magnetic pillar 312, the fifth magnetic pillar 315, the sixth magnetic pillar 316, and the seventh magnetic pillar 317, and a frame of the third-phase inductor 303 is enclosed by the sixth magnetic pillar 316, the eighth magnetic pillar 318, the ninth magnetic pillar 319, and the tenth magnetic pillar 310. The first-phase inductor 301 and the second-phase inductor 302 share the second magnetic pillar 312, and the third-phase inductor 303 and the second-phase inductor 302 share a sixth magnetic pillar 316.

In addition, in the inductor 3 shown in FIG. 15, the first-phase inductor 301, the second-phase inductor 302, and the third-phase inductor 303 each include the separation magnetic core 32, the winding magnetic core 33, the first coil 34 (magnetic core coil), and the second coil 35. Details are not described in this application again.

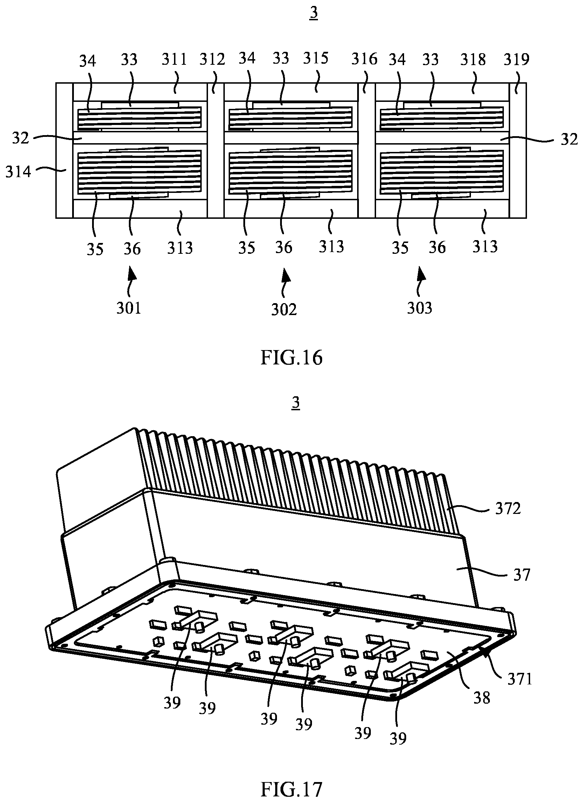

FIG. 16 shows an example of still another structure of the inductor 3. A part of the structure of the inductor 3 is hidden in FIG. 16. The inductor 3 shown in FIG. 16 is also a three-phase integrated inductor. In the inductor 3 shown in FIG. 16, the third coil 36 (a hollow coil) is further disposed inside each second coil 35. In some other examples, when the inductor 3 is a three-phase integrated inductor, a magnetic core and a coil of each phase may alternatively be of the structure shown in FIG. 13.

In an example in which the inductor 3 is a multi-phase integrated inductor (for example, the three-phase integrated inductors shown in FIG. 15 and FIG. 16), the inductor 3 may also include the heat dissipation cover 37 and the circuit board 38. FIG. 17 shows an example of the heat dissipation cover 37 and the circuit board 38 that are used for the multi-phase integrated inductor. The structures shown in FIG. 15 and FIG. 16 may be mounted in the heat dissipation cover 37 shown in FIG. 17. The circuit board 38 may be fastened to the mounting opening 371 of the heat dissipation cover 37 through a bolt. Coils of inductors of phases in FIG. 15 and FIG. 16 may be electrically connected through a corresponding trace on the circuit board 38. For example, the first coil 34 and the second coil 35 in the first-phase inductor 301 may be electrically connected through a trace on the circuit board 38.

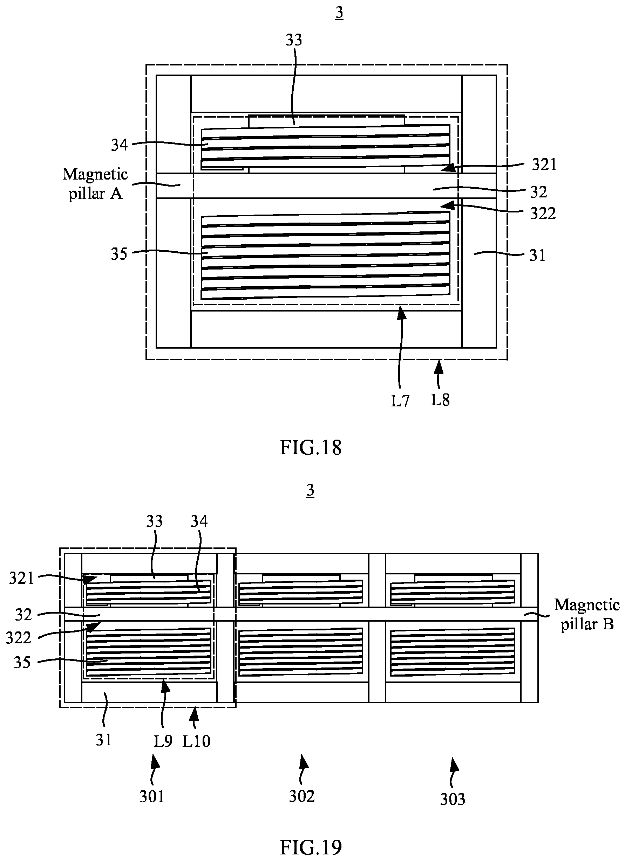

For definitions of the frame magnetic core 31 and the separation magnetic core 32, in addition to the cases shown in the foregoing plurality of examples, refer to still another inductor 3 shown in FIG. 18. Refer to FIG. 18. A part between a dashed-line box L7 and a dashed-line box L8 is the frame magnetic core 31, and the separation magnetic core 32 separates the frame magnetic core 31 into the first accommodation cavity 321 and the second accommodation cavity 322. It may be understood that the inductor 3 has a magnetic pillar A, one part (for example, an end part) of the magnetic pillar A forms a part of the frame magnetic core 31, and the other part of the magnetic pillar A is used as the separation magnetic core 32.

FIG. 19 shows still another inductor 3. The inductor 3 may be a three-phase integrated inductor, and a part between a dashed-line box L9 and a dashed-line box L10 is the frame magnetic core 31 of an inductor of one phase (for example, the first-phase inductor 301). The separation magnetic core 32 of the first-phase inductor 301 separates the frame magnetic core 31 of the first-phase inductor 301 into the first accommodation cavity 321 and the second accommodation cavity 322, and an inductor of each phase includes the frame magnetic core 31 and the separation magnetic core 32. It may be understood that, the inductor 3 has a magnetic pillar B, one part of the magnetic pillar B forms a part of the frame magnetic core 31, and the other part of the magnetic pillar A is used as the separation magnetic core 32.

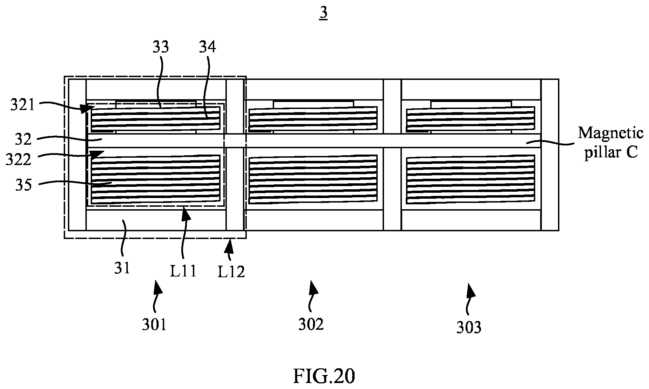

Alternatively, FIG. 20 shows still another inductor 3 (three-phase integrated inductor). Apart between a dashed-line box L11 and a dashed-line box L12 is the frame magnetic core 31 of an inductor of one phase (for example, the first-phase inductor 301). The separation magnetic core 32 separates the frame magnetic core 31 into the first accommodation cavity 321 and the second accommodation cavity 322, and an inductor of each phase includes the frame magnetic core 31 and the separation magnetic core 32. It may be understood that, the inductor 3 has a magnetic pillar C, one part of the magnetic pillar C forms a part of the frame magnetic core 31, and the other part of the magnetic pillar C is used as the separation magnetic core 32. A difference between the magnetic pillar C and the magnetic pillar B lies in that the magnetic pillar B penetrates side columns on two sides of the inductor 3, and the magnetic pillar C is located between the side columns on the two sides of the inductor 3.

A magnetic pillar (for example, the first magnetic pillar 311, the second magnetic pillar 312, the third magnetic pillar 313, or the fourth magnetic pillar 314) described in this application is not necessarily a standard column, and may alternatively be a cover shape or a plate shape. This is not specifically limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, wherein the power converter comprises a housing, a power circuit, and one or more inductors, wherein
the housing is configured to accommodate the power circuit;
the power circuit is configured to convert a direct current from a photovoltaic module or an energy storage battery into an alternating current; and
the inductor is fastened relative to the housing, and the inductor comprises a frame magnetic core, a separation magnetic core, a winding magnetic core, a first coil, and a second coil, wherein
the separation magnetic core is located in space enclosed by the frame magnetic core, to separate the frame magnetic core into a first accommodation cavity and a second accommodation cavity;
the first accommodation cavity is configured to accommodate the winding magnetic core, and the winding magnetic core is configured to wind the first coil; and
the second accommodation cavity is configured to accommodate the second coil, and the first coil is electrically connected to the second coil.

2. The power converter according to claim 1, wherein when a current is applied to the first coil and the second coil, a direction of a magnetic field inside the first coil is the same as a direction of a magnetic field inside the second coil.

3. The power converter according to claim 1 or 2, wherein both the first coil and the second coil are wound in an axial direction of the winding magnetic core, and the axial direction of the winding magnetic core is parallel to an arrangement direction of the first accommodation cavity and the second accommodation cavity.

4. The power converter according to claim 3, wherein one part of the second coil is located in the second accommodation cavity and is wound in the axial direction of the winding magnetic core, and the other part of the second coil extends out of the second accommodation cavity.

5. The power converter according to claim 1 or 2, wherein the first coil is wound in an axial direction of the winding magnetic core, the second coil is wound in a direction parallel to the axial direction of the winding magnetic core, and the axial direction of the winding magnetic core is perpendicular to an arrangement direction of the first accommodation cavity and the second accommodation cavity.

6. The power converter according to claim 5, wherein one part of the second coil is located in the second accommodation cavity and is wound in the direction parallel to the axial direction of the winding magnetic core, and the other part of the second coil extends out of the second accommodation cavity.

7. The power converter according to any one of claims 1 to 6, wherein the inductor further comprises a third coil, the third coil is at least partially located in the second accommodation cavity, and the third coil is electrically connected to the second coil; and
when a current is applied to the second coil and the third coil, a direction of a magnetic field inside the second coil is the same as a direction of a magnetic field inside the third coil.

8. The power converter according to claim 7, wherein one of the second coil and the third coil is sleeved outside the other.

9. The power converter according to any one of claims 1 to 8, wherein the inductor further comprises a circuit board, two outlet ends of the first coil and two outlet ends of the second coil are all fastened to the circuit board, and one outlet end of the first coil is electrically connected to one outlet end of the second coil through a trace of the circuit board.

10. The power converter according to any one of claims 1 to 9, wherein the frame magnetic core comprises a first magnetic pillar, a second magnetic pillar, a third magnetic pillar, and a fourth magnetic pillar that are sequentially connected end to end, and an arrangement direction of the first magnetic pillar and the third magnetic pillar is perpendicular to an arrangement direction of the second magnetic pillar and the fourth magnetic pillar; and
the first accommodation cavity is located between the first magnetic pillar and the separation magnetic core, and the second accommodation cavity is located between the separation magnetic core and the third magnetic pillar.
